# EUROPEAN PATENT SPECIFICATION

(11) **EP 2 127 905 B1**
(45) Date of publication and mention of the grant of the patent: **18.01.2012**
(21) Application number: 09006629.1
(22) Date of filing: 15.05.2009
(51) Int. Cl.: B60C 11/00

(54) **Pneumatic tire**
Luftreifen
Pneu

(30) Priority: 23.05.2008 JP 2008135627
(43) Date of publication of application: 02.12.2009
(73) Proprietor: The Yokohama Rubber Co., Ltd., Minato-ku Tokyo 105-8685 (JP)
(72) Inventor: Nagayoshi, Masatoshi c/o The Yokohama Rubber Co., Ltd., Hiratsuka-shi Kanagawa 254-8601 (JP)
(74) Representative: HOFFMANN EITLE

(56) References cited:
- JP-A- 11 348 510
- JP-A- 2001 219 712
- JP-A- 2002 046 422
- US-A1- 2006 016 538
- US-B1- 6 578 612

## Description

### BACKGROUND OF THE INVENTION

### 1. FIELD OF THE INVENTION

The present invention relates to a pneumatic tire suitable for off-road running, and more specifically to a pneumatic tire capable of reducing pattern noise without sacrificing off-road performance.

### 2. DESCRIPTION OF THE RELATED ART

A pneumatic tire mounted on a 4WD vehicle such as a pickup truck is required to have favorable off-road performance, such as performances for running in mud and running on snow. For superior off-road performance, a pneumatic tire of the above-mentioned kind is provided with lateral grooves extending in the tire-width direction and arranged at a predetermined pitch in the tire-circumferential direction. However, since blocks defined by the lateral grooves cause loud impact sounds, the provision of lateral grooves may lead to a poor noise performance of the tire, in particular, an increase in pattern noise.

The inventors of the present application have proposed a pneumatic tire designed to accomplish a reduction in pattern noise without sacrificing off-road performance by means of a special arrangement of the grooves and blocks in the center section of a tread area (see, for example, Japanese patent application Kokai publication No. 2007-302071). The pneumatic tire, however, still employs a conventional tread pattern in each of its shoulder sections. Accordingly, there are still some rooms for further improvement.

JP 11348510 A discloses a tire falling within the scope of the preamble to Claim 1 below.

### SUMMARY OF THE INVENTION

An advantage obtainable with embodiments of the present invention is to provide a pneumatic tire capable of reducing pattern noise without sacrificing off-road performance.

To achieve the above-mentioned advantage, there is provided a pneumatic tire as recited in Claim 1 below. In the provided pneumatic tire, circumferential main grooves are formed respectively in shoulder sections of a tread area so as to extend in a tire-circumferential direction; lateral grooves are formed in the shoulder sections so as to extend outwards in a tire-width direction from the circumferential main grooves and to be arranged at a predetermined pitch in the tire-circumferential direction; and blocks are formed in the shoulder sections by the circumferential main grooves and the lateral grooves. The pneumatic tire includes fine grooves each extending so as to connect each adjacent two of the lateral grooves in the tire-circumferential direction, each fine groove dividing the corresponding block into an inner block and an outer block. The outer block is offset with respect to the inner block in the tire-circumferential direction by an amount ranging from 15% to 30% of the pitch length at which the lateral grooves are arranged.

Since each of the blocks located in the shoulder sections is divided into the inner block and the outer block, the stiffness of the blocks can be lowered in the shoulder sections. Accordingly, when coming into contact with the ground, the blocks produce lower impact sounds. In addition, since each inner block and the corresponding outer block are offset with respect to each other in the tire-circumferential direction, the timing at which the front-side edge of the inner block hits the road surface and produces the impact sound can be made different from the timing at which the front-side edge of the outer block does. Consequently, the pattern noise attributable to the tread pattern in the shoulder sections can be reduced.

The offsetting of inner blocks and their respective outer blocks in the tire-circumferential direction lead to partial shifts of lateral grooves in the tire-circumferential direction, and thus lead to the reduction in off-road performance. The forming of the fine grooves, however, can compensate for the reduction, thereby achieving off-road performance that is at least as high as that of a conventional tire.

### BRIEF DESCRIPTION OF THE DRAWINGS

To better understand the claimed invention and to show how the same may be carried into effect, reference will now be made, by way of example only, to the appended drawings, in which:
Fig. 1 is a development view of a part of the tread area of a pneumatic tire according to an embodiment of the present invention;
Fig. 2 is an enlarged view of a principal portion of Fig. 1;
Fig. 3A is a sectional view of a raised bottom portion taken along a line crossing a fine groove;
Fig. 3B is a sectional view of the raised portion taken along a fine groove; and

### DETAILED DESCRIPTION

Embodiments of the present invention will be described below in detail by referring to the accompanying drawings.

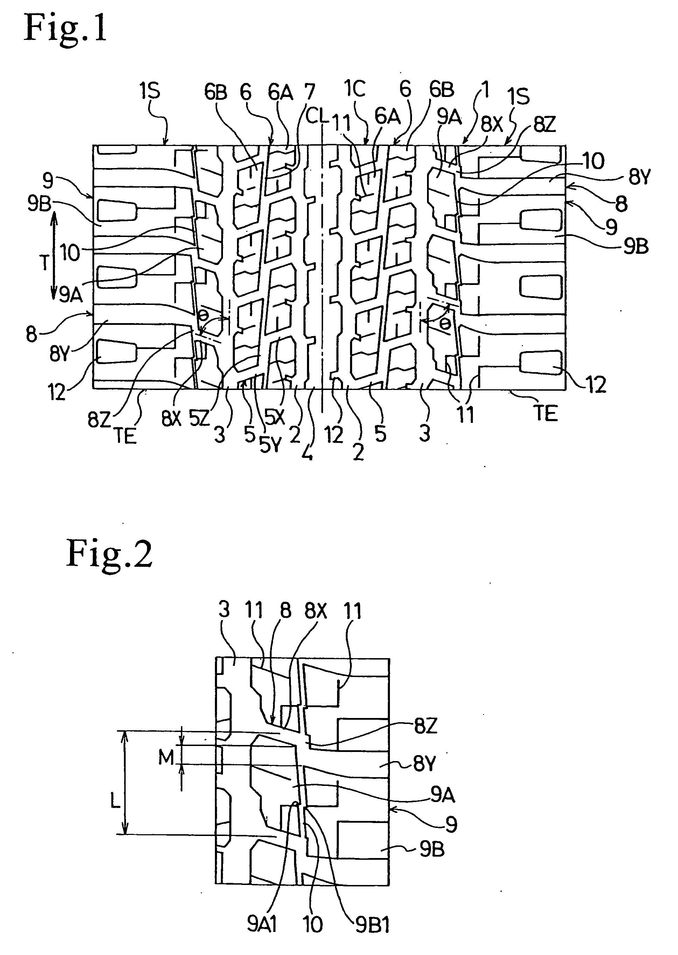

Figs. 1 and 2 illustrate a pneumatic tire according to an embodiment of the present invention. In these drawings, reference numeral 1 denotes the tread area of the tire; CL denotes a tire equatorial plane; and T denotes the circumferential direction of the tire (hereafter, referred also to as the tire-circumferential direction).

Four circumferential main grooves are formed in the tread area 1. Each circumferential main groove is in a zigzag shape and extends in the tire-circumferential direction T. Specifically, the four circumferential main grooves include: two inner circumferential main grooves 2 and two outer circumferential main grooves 3. The two inner circumferential main grooves 2 are formed respectively at the two sides of the tire equatorial plane CL while the two outer circumferential main grooves 3 are formed at the outer sides, in the tire-width direction, of their respective inner circumferential main grooves 2. The section located between the two outer circumferential main grooves 3 is referred to as a center section 1C of the tread area 1. The section located at the outer side, in the tire-width direction, of each outer circumferential main groove 3 is referred to as a shoulder section 1S of the tread area 1. Note that each of the circumferential main grooves 2 and 3 here is a groove extending in the circumferential direction of the tire and having a width of 6 mm to 10 mm and a depth of 8 mm to 12 mm.

A rib 4 is formed between the two inner circumferential main grooves 2. The rib 4 extends continuously in the tire circumferential direction T. Lateral grooves 5 each have a crank shape and extend so as to connect each inner circumferential main groove 2 to the corresponding outer circumferential main groove 3. The lateral grooves 5 are arranged at a predetermined pitch in the tire-circumferential direction T. Each inner circumferential main groove 2, the corresponding outer circumferential main groove 3, and the corresponding lateral grooves 5 together define plural blocks 6. Each block 6 is divided into an inner block 6A and an outer block 6B by a fine groove 7, which extends in the tire-circumferential direction T so as to connect every two adjacent lateral grooves 5.

Each lateral groove 5 includes: an inner lateral-groove section 5X; an outer lateral-groove section 5Y; and an intermediate lateral-groove section 5Z. With these three sections, each lateral groove 5 extends so as to have a crank shape. The inner lateral-groove section 5X extends straight so as to connect the inner circumferential main groove 2 and the fine groove 7. The outer lateral-groove section 5Y extends straight so as to connect the outer circumferential main groove 3 and the fine groove 7. The intermediate lateral-groove section 5Z extends straight in the tire-circumferential direction T so as to connect the inner lateral-groove section 5X to the outer lateral-groove section 5Y. Each inner lateral-groove section 5X and each outer lateral-groove section 5Y extend in a same oblique direction with respect to the tire-circumferential direction T. Each inner block 6A and the corresponding outer block 6B offset with respect to each other in the tire-circumferential direction T with the corresponding crank-shaped lateral groove 5 interposed in between.

In each portion between each inner circumferential main groove 2 and the corresponding outer circumferential main groove 3, each block 6 is divided by the fine groove 7 into the two types of blocks 6A and 6B, so that the block stiffness is reduced. In addition, each inner block 6A and the corresponding outer block 6B are arranged so as to be offset with respect to each other in the tire-circumferential direction T. Accordingly, the impact noise produced when the blocks 6A and 6B come into contact with the ground is reduced. In addition, the blocks 6A and 6B produce the impact noise at different timings. Consequently, the pattern noise caused by the blocks 6 is reduced.

In each shoulder section 1S, lateral grooves 8 are arranged at a predetermined pitch in the tire-circumferential direction T. Each lateral groove 8 extends from the outer circumferential main groove 3 outwards in the tire-width direction beyond the corresponding one of tire contact-area edges TE. Each outer circumferential main groove 3 and the corresponding lateral grooves 8 define plural blocks 9. Each lateral groove 8 extends so as to have a crank shape. A fine groove 10 that extends in the tire-circumferential direction T is formed at a bending portion of two lateral grooves 8 adjacent in the tire-circumferential direction T. This fine groove 10 divides each block 9 into an inner block 9A located at the inner side in the tire-width direction and an outer block 9B located at the outer side in the tire-width direction.

Note that each of the lateral grooves 8 here is a groove having a width of 3 mm to 12 mm and a depth of 50% to 100% of the main-groove depth. Each of the fine grooves 10 here is a groove having a width of 1.5 mm to 5.0 mm and a depth of 3 mm to 10 mm. Each fine groove 10 is narrower than and shallower than each lateral groove 8

Each lateral groove 8 includes: an inner lateral-groove section 8X; an outer lateral-groove section 8Y; and an intermediate lateral-groove section 8Z. With these three sections, each lateral groove 8 extends so as to have a crank shape. The inner lateral-groove section 8X extends straight so as to connect the outer circumferential main groove 3 and the fine groove 10. The outer lateral-groove section 8Y extends straight from the fine groove 10 outwards in the tire-width direction. The intermediate lateral-groove section 8Z extends in the tire-circumferential direction T so as to connect the inner lateral-groove section 8X to the outer lateral-groove section 8Y. Each inner lateral-groove section 8X and each outer lateral-groove section 8Y extend in different oblique directions with respect to the tire-circumferential direction T. Each inner block 9A and the corresponding outer block 9B offset with respect to each other in the tire-circumferential direction T with the corresponding crank-shaped lateral groove 8 interposed in between.

The pneumatic tire shown in Fig. 1 has a non-directional and asymmetric tread pattern. Accordingly, each outer block 9B is shifted to one side (specifically, to the upper side in Fig. 1) in the tire-circumferential direction T with respect to the corresponding inner block 9A in one of the shoulder sections 1S (specifically, in the shoulder section 1S located on the left-hand side in Fig. 1), while each outer block 9B is shifted to an opposite side (specifically, to the lower side in Fig. 1) in the tire-circumferential direction T with respect to the corresponding inner block 9A in the other one of the shoulder sections 1S (specifically, in the shoulder section 1S located on the right-hand side in Fig. 1). The offset amount M in the tire-circumferential direction T is set within a range between 15% and 30% of the length L of the pitch at which the lateral grooves 8 are arranged. Fig. 1 also shows sipes 11 and slots 12.

As has been described thus far, according to the embodiment of the present invention, since each of the blocks 9 located in the shoulder sections 1S is divided into the inner block 9A and the outer block 9B, the stiffness of the blocks 9 can be lowered in the shoulder sections. Accordingly, when coming into contact with the ground, the blocks 9 produce lower impact sounds. In addition, since each inner block 9A and the corresponding outer block 9B are offset with respect to each other in the tire-circumferential direction T, the timing at which the front-side edge of the inner block 9A hits the road surface and produces the impact sound can be made different from the timing at which the front-side edge of the outer block 9B does. Consequently, the pattern noise attributable to the tread pattern in the shoulder sections 1S can be reduced.

The offsetting of inner blocks 9A and their respective outer blocks 9B in the tire-circumferential direction T lead to partial shifts of lateral grooves 8 in the tire-circumferential direction T, and thus lead to the reduction in off-road performance. The forming of the fine grooves 10, however, can compensate for the reduction, thereby achieving off-road performance that is at least as high as that of a conventional tire.

An offset amount M that is less than 15% of the pitch length L lowers down the noise-reduction effect obtained by the different timings at which the front-side edge of each inner block 9A and that of the corresponding outer block 9B hit the road surface and produce the impact sounds. In contrast, an offset amount that is higher than 30% of the pitch length L results in a significant uneven wear of the blocks 9.

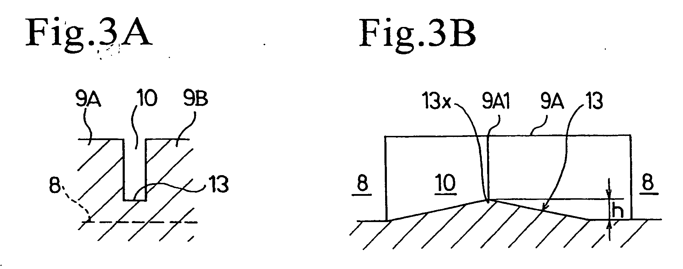

In this embodiment of the present invention, it is preferable that a section of the bottom of each fine groove 10 is raised to form a raised-floor portion 13 as Figs. 3A and 3B show and that the raised-floor portion 13 be used to connect the corresponding inner and outer blocks 9A and 9B. Accordingly, the stiffness of the inner blocks 9A and that of the outer blocks 9B can be increased so that an uneven wear attributable to the fine grooves 10 is prevented.

The height of each raised-floor portion 13 is gradually increased toward its highest center area in the tire-circumferential direction T, and is gradually decreased from the highest center area in the tire circumferential direction T. As Fig. 2 shows, each fine groove 10 may be formed in a crank shape. In the bending portion of the fine groove 10, a protruding portion 9A1 of the inner block 9A and a protruding portion 9B1 of the outer block 9B face each other across the fine groove 10. The protruding portions 9A1 and 9B1 are located in the center areas, in the tire-circumferential direction T, of the respective inner and outer blocks 9A and 9B. In this case, it is preferable, as Fig. 3B shows, the highest portion of the raised-floor portion 13 be located at a position that is adjacent to the protruding portions 9A1 and 9B1, that is, be located at the center area 13x, in the tire-circumferential direction, of the raised-floor portion 13. Accordingly, the protruding portions 9A1 and 9B1 which would otherwise have lower stiffness obtain higher stiffness. Consequently, the uneven wear of the protruding portions 9A1 and 9B1 can be reduced. Needless to say, the raised-floor portion 13 does not have to have a height that is gradually changing, and may have a constant height, instead.

The height h of each raised-floor portion 13 from the bottom of the fine groove 10 may preferably be determined in the following way to reduce the uneven wear caused by the fine grooves 10. The height h is preferably equal to or higher than 10% of the depth of each circumferential main groove 3 adjacent to the fine groove 10 in which the raised-floor portion 13 is formed. In addition, to enhance the water drainage of the fine grooves 10 and the performance in mud, the highest point of the raised-floor portion 13 preferably has a height h that does not exceed 30% of the depth of each adjacent circumferential main groove 3.

To reduce the road noise, the lateral grooves 8 formed in one of the shoulder sections 1S are preferably formed so as to be offset, in the tire-circumferential direction T, with respect to the lateral grooves 8 formed in the other one of the shoulder sections 1S. In this case, to obtain a favorable road-noise reduction effect, the inner lateral-groove sections 8X that communicate with the circumferential main groove 3 for one of the shoulder areas 1S are offset, in the tire-circumferential direction T, with respect to the inner lateral-groove sections 8X that communicate with the circumferential main groove 3 for the other one of the shoulder areas 1S by an amount ranging from 40% to 60% of the pitch length L at which the lateral grooves 8 are arranged.

The inner and the outer lateral-groove sections 8X and 8Y of the lateral-groove 8 are the elements that extend in the tire-width direction, and preferably angled at θ with respect to the tire-circumferential direction T, an angle θ being preferably in a range of 90° ± 30°. This is because an angle θ that is out of this range lowers the performance on snow (especially a traction performance).

The present invention is suitably applicable to a pneumatic tire for off-road running, to which an inflation pressure ranging from 220 kPa to 450 kPa is applied and in which the shoulder sections 1S carry a higher load. Needless to say, such an off-road tire is not the only application of the present invention.

### EXAMPLES

Pneumatic tires of Examples 1 to 5 based on the present invention, pneumatic tires of Comparative Examples 1 to 3, and a pneumatic tire of Conventional Example were fabricated as follows. Each of the tires had a common size specified as 205R16C 110/108S. The offset amount M between outer blocks and their respective inner blocks in the shoulder sections for the tires of Examples 1 to 5 and the Comparative Examples 1 to 3 were set as listed in Table 1. Note that the offset amounts M are given in Table 1 as a percentage of the offset amount relative to the pitch length L of the lateral grooves. Each of the tires of Example 1 to 4 and of Comparative Examples 1 and 2 has a configuration shown in Fig. 1. The tire of Comparative Example 3 was basically the same as the tire of Embodiment 2, but had no fine groove. The tire of Conventional Example was basically the same as the tire of Comparative Example 3, but had a zero offset amount M between the outer blocks and their respective inner blocks in the shoulder sections. The tire of Example 5 was basically the same as the tire of Example 2, but had raised-floor portions formed respectively in the fine grooves as Figs. 3A and 3B show.

Each of the tires of Examples 1 to 5 and of Comparative Examples 1 and 2 had fine grooves each having a 3-mm width and a 5-mm depth. The raised-floor portion of the tire of Example 5 had a height h equivalent to 30% of the depth of each of its circumferential main grooves. In each of the tested tires, each circumferential main groove had a 10-mm depth, and the angle θ that each of the lateral grooves in the shoulder sections forms with the tire-circumferential direction T was: 70° for the inner lateral-groove section; and 90° for the outer lateral-groove section. Moreover, in each of the tested tires, the amount of offset between the inner lateral-groove sections of one shoulder section and that of the other shoulder section was 50% of the pitch length L.

Each of the tested tires was fitted to a wheel with a rim size of 16 × 6 J and then the wheels with tires were mounted on a 4WD vehicle. The front tires were inflated with a pressure of 260 kPa; the rear tires with a pressure of 400 kPa. Tests were conducted, in accordance with the methods to be described below, in order to assess the off-road performance, the noise performance, and the uneven-wear resistance. Table 1 shows the assessment results.

### OFF-ROAD PERFORMANCE

On an off-road test course, a sensory assessment was conducted by the test driver on the off-road performance. The assessment results shown in Table 1 are given by indices with the assessment result for the tire of Conventional Example being normalized to 100. Here a larger index value means better off-road performance.

### NOISE PERFORMANCE

A microphone was installed on the window side of the driver's seat. While the vehicle coasted on a paved road at a speed of 80 km/h, the in-cabin noise caused by the pattern noise was measured.

### UNEVEN-WEAR RESISTANCE

After the vehicle traveled 8,000 km (mountain path: 59%; paved road: 41%), a measurement was conducted on the amount (mm) of the heel-and-toe wear in the blocks located in the shoulder sections (also known as the cupping, which is a kind of uneven wear caused by the faster wearing of one side of each tread resulting in a contour of a serrate shape viewed from a side). The assessment results shown in Table 1 are given by indices with the assessment result for Conventional Example being normalized to 100. A larger index value means better resistance to uneven wear. An index value of 97 or smaller means the occurrence of significantly poor uneven wear.

**Table 1**

| | Conventional Example | Comparative Example 1 | Example 1 | Example 2 | Example 3 | Example 4 | Comparative Example 2 | Example 5 | Comparative Example 3 |
|---|---|---|---|---|---|---|---|---|---|
| Shift amount M (%) | 0 | 10 | 15 | 20 | 25 | 30 | 35 | 20 | 20 |
| Off-road performance | 100 | 100 | 100 | 100 | 100 | 100 | 100 | 100 | 95 |
| Noise performance (dB) | 70 | 69 | 68 | 67 | 66 | 65 | 64 | 67 | 69 |
| Uneven-wear resistance | 100 | 98 | 98 | 98 | 98 | 98 | 95 | 100 | 100 |

The assessment results shown in Table 1 reveal that the present invention can achieve a reduction in pattern noise without sacrificing the off-road performance. In addition, the result for the tire of Example 5 indicates that the raised-floor portion is effective in reducing the uneven wear.

## Claims

1. A pneumatic tire in which: circumferential main grooves (3) are formed respectively in shoulder sections (1S) of a tread area (1) so as to extend in a tire-circumferential direction (T); lateral grooves (8) are formed in the shoulder sections (1S) so as to extend outwards in a tire-width direction from the circumferential main grooves (3) and to be arranged at a predetermined pitch in the tire-circumferential direction (T); and blocks (9) are formed in the shoulder sections (1S) by the circumferential main grooves (3) and the lateral grooves (8), the pneumatic tire comprising
fine grooves (10) each extending so as to connect each adjacent two of the lateral grooves (8) in the tire-circumferential direction (T), each fine groove (10) dividing the corresponding block (9) into an inner block (9A) and an outer block (9B), wherein
the outer block (9B) is offset with respect to the inner block (9A) in the tire-circumferential direction (T) by an amount ranging from 15% to 30% of the pitch length (L) at which the lateral grooves (8) are arranged;
the pneumatic tire **characterised in that** it further comprises a raised-floor portion (13) formed in the bottom of each of the fine grooves (10), the raised-floor portion (13) connecting the inner block (9A) to the outer block (9B),
the inner block (9A) and the outer block (9B) include protruding portions (9A1 and 9B1) respectively, the protruding portions (9A1, 9B 1) being formed at center areas, in the tire-circumferential direction (T), of the inner and the outer blocks (9A and 9B) respectively so as to protrude into the fine groove and face each other across the fine groove (10), and
the center area (13x), in the tire-circumferential direction (T), of the raised-floor portion (13) that is adjacent to the protruding portions (9A1 and 9B1) is higher than any other areas of the raised-floor portion (13).

2. The pneumatic tire according to claim 1 **characterized in that** the height (h) of the raised-floor portion (13) gradually increases toward and gradually decreases from a center area (13x), in the tire-circumferential direction (T), of the raised-floor portion (13), so that the center area (13x) becomes the highest point.

3. The pneumatic tire according to claim 1 or 2 **characterized in that** the height (h) of the raised-floor portion (13) is 10% to 30% of a depth of the circumferential main groove (3).

4. A pneumatic tire according to any one of claims 1 to 3 **characterized in that**
lateral-groove sections (8X) of the lateral grooves (8) are offset in the tire-circumferential direction (T) between the shoulder sections (1S) of the tread area (1) with respect to each other by an amount ranging from 40% to 60% of the pitch length (L), the lateral-groove sections (8X) being sections located between each of the circumferential main grooves (3) and a corresponding one of the fine grooves (10).

5. The pneumatic tire according to any one of claims 1 to 4 **characterized in that** each of the lateral grooves (8) makes an angle θ of 90°±30° with the tire-circumferential direction (T).

## Patentansprüche

1. Luftreifen, bei dem: umfängliche Hauptnuten (3) jeweils in Schultersektionen (1S) einer Lauffläche (1) so ausgebildet sind, dass sie sich in einer Reifenumfangsrichtung (T) erstrecken; Seitennuten (8) in den Schultersektionen (1S) so ausgebildet sind, dass sie sich in einer Reifenbreitenrichtung von den umfänglichen Hauptnuten (3) nach außen erstrecken und mit einer vorher festgelegten Versetzung in der Reifenumfangsrichtung (T) anzuordnen sind; und Blocks (9) in den Schultersektionen (1S) durch die umfänglichen Hauptnuten (3) und die Seitennuten (8) ausgebildet sind, wobei der Luftreifen aufweist:
schmale Nuten (10), die sich jeweils so erstrecken, dass sie zwei benachbarte Seitennuten (8) in der Reifenumfangsrichtung (T) verbinden, wobei jede schmale Nut (10) den entsprechenden Block (9) in einen inneren Block (9A) und einen äußeren Block (9B) aufteilt, wobei
der äußere Block (9B) von dem inneren Block (9A) in der Reifenumfangsrichtung (T) um einen Abstand, der zwischen 15% und 30% der Versetzungslänge (L), mit der die Seitennuten (8) angeordnet sind, beabstandet ist;
wobei der Luftreifen **dadurch gekennzeichnet ist, dass** er ferner einen angehobenen Bodenabschnitt (13) aufweist, der in der Grundfläche jeder schmalen Nut (10) ausgebildet ist, wobei der angehobene Bodenabschnitt (13) den inneren Block (9A) mit dem äußeren Block (9B) verbindet,
dass der innere Block (9A) und der äußere Block (9B) jeweils hervorstehende Abschnitte (9A1, 9B1) aufweisen, wobei die hervorstehenden Abschnitte (9A1, 9B1) an in der Reifenumfangsrichtung (T) mittleren Flächen der inneren und äußeren Blöcke (9A, 9B) jeweils so ausgebildet sind, dass sie in die schmale Nut hervorstehen und einander über die schmale Nut (10) gegenüberliegen, und
dass die in der Reifenumfangsrichtung (T) mittlere Fläche (13x) des angehobenen Bodenabschnitts (13), der den hervorstehenden Abschnitten (9A1, 9B1) benachbart ist, höher ist als jede andere Fläche des angehobenen Bodenabschnitts (13).

2. Luftreifen nach Anspruch 1, **dadurch gekennzeichnet, dass** die Höhe (h) des angehobenen Bodenabschnitts (13) in der Reifenumfangsrichtung (T) des angehobenen Bodenabschnitts (13) zu einer mittleren Fläche (13x) hin allmählich ansteigt und von dieser weg allmählich abnimmt, so dass die mittlere Fläche (13x) der höchste Punkt ist.

3. Luftreifen nach Anspruch 1 oder 2, **dadurch gekennzeichnet, dass** die Höhe (h) des angehobenen Bodenabschnitts (13) zwischen 10% und 30% einer Tiefe der umfänglichen Hauptnut (3) ist.

4. Luftreifen nach einem der Ansprüche 1 bis 3, **dadurch gekennzeichnet, dass**
Seitennutsektionen (8X) der Seitennuten (8) in der Reifenumfangsrichtung (T) zwischen den Schultersektionen (1S) der Lauffläche (1) relativ zueinander mit einem Abstand zwischen 40% und 60% der Versetzungslänge (L) beabstandet sind, wobei die Seitennutsektionen (8X) Sektionen sind, die zwischen jeder der umfänglichen Hauptnuten (3) und einer entsprechenden schmalen Nut (10) angeordnet sind.

5. Luftreifen nach einem der Ansprüche 1 bis 4, **dadurch gekennzeichnet, dass** jede der Seitennuten (8) einen Winkel θ von 90° ± 30° mit der Reifenumfangsrichtung (T) aufweist.

## Revendications

1. Pneu pneumatique dans lequel : des rainures principales circonférentielles (3) sont formées respectivement dans des sections d'épaulement (1S) d'une surface de bande de roulement (1) de façon à s'étendre dans une direction circonférentielle de pneu (T) ; des rainures latérales (8) sont formées dans les sections d'épaulement (1S) de façon à s'étendre vers l'extérieur dans la direction de largeur de pneu à partir des rainures principales circonférentielles (3) et à être agencées à un pas prédéterminé dans la direction circonférentielle de pneu (T) ; et des blocs (9) sont formés dans les sections d'épaulement (1S) par les rainures principales circonférentielles (3) et les rainures latérales (8), le pneu pneumatique comprenant
des rainures fines (10), chacune s'étendant de façon à être reliée à chaque groupe adjacent de deux des rainures latérales (8) dans la direction circonférentielle de pneu (T), chaque rainure fine (10) divisant le bloc correspondant (9) en un bloc intérieur (9A) et en un bloc extérieur (9B),
dans lequel
le bloc extérieur (9B) est décalé par rapport au bloc intérieur (9A) dans la direction circonférentielle de pneu (T) d'une quantité allant de 15 % à 30 % de la longueur de pas (L) selon lequel les rainures latérales (8) sont agencées ;
le pneu pneumatique étant **caractérisé en ce qu'**il comprend en outre une partie surélevée (13) formée dans le fond de chacune des rainures fines (10), la partie surélevée (13) reliant le bloc intérieur (9A) au bloc extérieur (9B),
le bloc intérieur (9A) et le bloc extérieur (9B) incluent respectivement des parties en saillie (9A1 et 9B1), les parties en saillie (9A1, 9B1) étant formées au niveau de zones centrales, dans la direction circonférentielle de pneu (T), respectivement des blocs intérieur et extérieur (9A et 9B) de façon à dépasser dans la rainure fine et se faire face de part et d'autre de la rainure fine (10), et
la zone centrale (13x), dans la direction circonférentielle de pneu (T), de la partie surélevée (13) qui est adjacente aux parties en saillie (9A1 et 9B1) est plus haute que toutes les autres zones de la partie surélevée (13).

2. Pneu pneumatique selon la revendication 1, **caractérisé en ce que** la hauteur (h) de la partie surélevée (13) augmente graduellement vers et diminue graduellement à partir d'une zone centrale (13x) dans la direction circonférentielle de pneu (T), de la partie surélevée (13), de sorte que la zone centrale (13x) devient le point le plus haut.

3. Pneu pneumatique selon la revendication 1 ou 2, **caractérisé en ce que** la hauteur (h) de la partie surélevée (13) est 10 % à 30 % d'une profondeur de la rainure principale circonférentielle (3).

4. Pneu pneumatique selon l'une quelconque des revendications 1 à 3, **caractérisé en ce que**
des sections de rainure latérale (8X) des rainures latérales (8) sont décalées dans la direction circonférentielle de pneu (T) entre les sections d'épaulement (1S) de la surface de bande de roulement (1) les unes par rapport aux autres d'une quantité allant de 40 % à 60 % de la longueur de pas (L), les sections de rainure latérale (8X) étant des sections situées entre chacune des rainures principales circonférentielles (3) et une rainure correspondante des rainures fines (10).

5. Pneu pneumatique selon l'une quelconque des revendications 1 à 4, **caractérisé en ce que** chacune des rainures latérales (8) fait un angle θ de 90° ± 30° avec la direction circonférentielle de pneu (T).
